# EUROPÄISCHE PATENTSCHRIFT

(11) **EP 1 346 628 B1**
(45) Veröffentlichungstag und Bekanntmachung des Hinweises auf die Patenterteilung: **23.11.2005**
(21) Anmeldenummer: 03005932.3
(22) Anmeldetag: 17.03.2003
(51) Int. Cl.: A01G 9/10

(54) **Kulturplate zum Bewurzeln von Jungpflanzen**
Cultivation tray for rooting seedlings
Plateau de culture pour l'enracinement de plantules

(30) Priorität: 18.03.2002 DE 10211723
(43) Veröffentlichungstag der Anmeldung: 24.09.2003
(73) Patentinhaber: Dümmen, Marga, 47495 Rheinberg (DE)
(72) Erfinder: Dümmen, Marga, 47495 Rheinberg (DE)
(74) Vertreter: Menges, Rolf

(56) Entgegenhaltungen:
- EP-A- 0 464 954
- EP-A- 0 988 783
- US-A- 4 050 188
- US-A1- 2002 035 803

## Beschreibung

Die Erfindung betrifft eine Kulturplatte, insbesondere zum Bewurzeln von Jungpflanzen, nach dem Oberbegriff des Anspruchs 1.

Gattungsgemäße Kulturplatten werden in Treibhäusern zur Bewurzelung von Jungpflanzen in großer Zahl eingesetzt, wobei in den Gewächshäusern ein für die jeweiligen Kulturpflanzen günstiges Klima und eine entsprechende Luftfeuchtigkeit vorhanden ist. In diesem Zusammenhang ist es besonders vorteilhaft, wenn die verwendete Wassermenge zur Regulierung der Luftfeuchtigkeit und Bewässerung der Jungpflanzen in engen Grenzen konstant gehalten werden kann und darüber hinaus in ausreichender Form sichergestellt ist, dass auch jede einzelne Jungpflanze ausreichend bewässert wird.

Aus der deutschen Patentschrift DE 198 44 020 ist beispielsweise eine Kulturplatte zum Bewurzeln von Jungpflanzen bekannt, die parallel zueinander und beabstandet angeordnete Vertiefungen in Form von Rillen zur Aufnahme der Jungpflanzen aufweist. Die Kulturplatte ist mit einem hochgezogenen umlaufenden Rand versehen, sodass eine ausreichende Stabilität gewährleistet ist. Der Plattenboden der Kulturplatte ist derart geformt, dass einzelne parallel verlaufenden Rillen entstehen und zwischen jeweils zwei benachbarten Rillen eine dachförmig ausgebildete Erhebung vorhanden ist. In die einzelnen Rillen werden eine bestimmte Anzahl von zusammenhängenden Mehrfachtöpfen mit Jungpflanzen eingehängt, sodass diese mit ihrem ausgebildeten Kragen die vorhandenen Nut und insbesondere die seitlichen Auflageflächen vollständig abdeckt. Hierdurch wird sichergestellt, dass das zur Berieselung vorgesehene Wasser vollständig über die dachförmigen Zwischenbereiche in die Mehrfachtöpfe gelangt, soweit diese nicht unmittelbar berieselt werden. Das überschüssige Wasser wird durch vorhandene Durchbrüche der Mehrfachtöpfe und eine Entwässerungsbohrung der Rillen einem Wasserauffangbehälter zugeleitet.

Aus der FR 2 661 061 A1, ist ebenfalls eine Kulturplatte bekannt, die zur Aufnahme von nach unten orientierten Töpfen mit Löchern im Bodenbereich und mit einem die Kulturplatte umfassenden umlaufenden Rand ausgestattet ist. Der Plattenboden ist hierbei gegenüber dem Rand tieferliegend angeordnet und in vorbestimmbarem Abstand zueinander sind im Plattenboden quergerichtete Rillen angeordnet, sodass eine rechteckige Kulturplatte nehmen kann eine bestimmte Anzahl von Einzeltöpfen aufnehmen kann. Hierbei wird ein Plattenboden verwendet, der entsprechend den in Längsrichtung der Platte angeordneten Töpfen Längsrinnen aufweist, die in solchen Abständen zueinander angeordnet sind, dass eine gesamte Längsreihe von Töpfen in eine Längsrinne des Plattenbodens hineinragt.

Als nachteilig bei den bekannten Ausführungen einer Kulturplatte ist anzusehen, dass die Herausnahme der Jungpflanzen aus den Mehrfachtöpfen nach erfolgter Bewurzelung zu Schwierigkeiten führen kann. Diese sind beispielsweise darauf zurückzuführen, dass das Erdreich aus den Mehrfachtöpfen aufgrund der eingetretenen Bewurzelung und Ausdehnung des Wurzelballens nur sehr schwer entfernbar ist. Des Weiteren hat sich gezeigt, dass immer wieder Beschädigungen an den Pflanzen während der Herausnahme der Mehrfachtöpfe eintreten. Soweit frühere Kulturplatten eingesetzt wurden, war zum Bewässern der Jungpflanzen in der Regel ein recht hoher Wasserverbrauch notwendig, wodurch Pflanzenkrankheiten, vor allem Pilzerkrankungen gefördert wurden. Darüber hinaus steht Wasser nicht immer in ausreichender Menge zur Bewässerung der Jungpflanzen je nach Anbaugebiet zur Verfügung.

Der Erfindung liegt die Aufgabe zugrunde, eine neuartige Kulturplatte zu schaffen, bei der zum Bewässern der Pflanzen vergleichsweise sehr wenig Wasser erforderlich ist und darüber hinaus sichergestellt ist, dass eine möglichst beschädigungsfreie Endnahme der einzelnen Jungpflanzen möglich ist.

Erfindungsgemäß wird die Aufgabe durch die kennzeichnenden Merkmale des Anspruchs 1 gelöst. Durch die erfindungsgemäße Ausgestaltung des Pflanzraumes für eine jede Jungpflanze wird zunächst einmal sichergestellt, dass es nicht zu einer Verklemmung zwischen Mehrfachtöpfen und den vorhandenen Vertiefungen der Kulturplatte kommt. Vielmehr bilden die Seitenwände der Vertiefungen bereits einen Teil des Pflanzraumes indem sich die Jungpflanzen entwickeln können. Die Pflanzräume werden hierbei in Längsrichtung der Vertiefungen durch Zwischenstege unterteilt, sodass einerseits für die Ausbildung der Pflanzräume wesentlich weniger Material eingesetzt werden muss und andererseits ein vergrößertes Pflanzvolumen zur Verfügung steht oder bei gleichem Pflanzraum eine Verkleinerung der Vertiefung möglich ist. Der besondere Vorteil der erfindungsgemäßen Ausführung liegt darin begründet, dass das zur Berieselung vorgesehene Wasser unmittelbar in den Pflanzraum gelangt und nicht zwischen Mehrfachtöpfen und Kulturplattenböden ablaufen kann. Durch die erfindungsgemäße Kulturplatte ist eine gleichmäßige Benetzung sämtlicher Pflanzen gewährleistet, auch wenn durch große Blätter eine Abdeckung des Wurzelbereichs benachbarter Pflanzen erfolgt. Somit wird ein Austrocknen und Absterben einzelner Pflanzen wirkungsvoll verhindert.

Die Seitenwände der Vertiefung können beispielsweise konisch zulaufend ausgebildet sein und ebenso können die Zwischenstege konisch zulaufende Seitenkanten aufweisen, sodass die Zwischenstege über die gesamte Seitenkante an den Seitenwänden der Vertiefung zu liegen kommen. Zur mittigen Zentrierung der Pflanzballen können die Zwischenstege darüber hinaus eine mittige Verdickung oder eine Führungskante an den Seitenkanten aufweisen, wodurch eine ausreichende Fixierung der Pflanzballen zwischen den einzelnen Zwischenstegen gewährleistet ist. Damit der Pflanzballen bei der Herausnahme nicht auseinander fällt können dem Erdreich gegebenenfalls Leimbinder zugesetzt werden, die einen größeren Zusammenhalt des Erdreiches herbeiführen.

Damit die Jungpflanzen in einer Pflanzreihe unterschiedliche Pflanzabstände einnehmen können, ist vorgesehen, dass die Zwischenstege ein- oder mehrwandig, insbesondere doppelwandig, ausgebildet sind. Hierdurch kann in Abhängigkeit der doppelwandigen Abstände, dass heißt zweier beabstandeter Zwischenstege, eine Anpassung an die Pflanzensorte erfolgen. Eine doppelwandige Anordnung von Zwischenstegen kann beispielsweise dadurch erreicht werden, dass ein Pflanzstreifen einen oberen Quersteg zwischen je zwei Zwischenstegen aufweist, der gegebenenfalls ein seitliches Gefälle zu den beiden Zwischenstegen besitzt, sodass das Wasser in die Pflanzräume ablaufen kann.

In weiterer Ausgestaltung der Erfindung ist vorgesehen, dass die Zwischenstege über eine Bodenleiste einstückig miteinander verbunden sind. Die Bodenleiste weist somit eine Reihe von Zwischenstegen auf, die die einzelnen Pflanzräume voneinander trennt. Aufgrund der Bodenleiste entsteht somit ein Pflanzstreifen mit einer Vielzahl von Pflanzräumen für die einzelnen Jungpflanzen, der in einfachster Weise aus der Vertiefung der Kulturplatte herausgehoben oder gemäß der Erfindung seitlich herausgeschoben werden kann. Durch das seitliche Herausschieben, welches darüber hinaus maschinell erfolgen kann, wird der gesamte Pflanzstreifen aus der Kulturplatte entfernt, wobei durch die spezielle Ausbildung der einzelnen Pflanzräume die Pflanzballen sehr leicht seitlich aus dem Pflanzstreifen herausgedrückt werden können. Auch die Herausnahme der Pflanzballen mit Jungpflanzen kann bei einer weiteren Automatisierung der Arbeitsvorgänge maschinell ausgeführt werden.

Damit eine Ableitung des überschüssigen Wassers ohne Problem möglich ist, wird in vorteilhafter Weise vorgesehen, dass die Bodenleiste den Boden der Vertiefung gar nicht oder nur punktuell berührt. Somit kann das Wasser unterhalb der Bodenleiste über den Boden der Vertiefung ablaufen. Damit die Bodenleiste gegenüber der Bodenvertiefung in einer erhöhten Position fixiert werden kann, dienen beispielsweise die konisch zulaufenden Seitenwände und korrespondierenden Zwischenstege oder die Bodenleiste kann auf der den Zwischenstegen abgewandten Seite einen seitlichen Rand, Verdickungen, angeformte Stege oder Füße aufweisen. Zur Entwässerung der einzelnen Pflanzräume ist hierbei vorgesehen, dass die Bodenleiste zwischen jeweils zwei Zwischenstegen eine Entwässerungsbohrung oder einen seitlichen eckigen oder halbrunden Einschnitt aufweist, sodass das überschüssige Wasser in die Vertiefung gelangt. Durch die Ausbildung einer hohlwandigen, gerippten oder zumindest abschnittsweise verstärkten Bodenleiste kann darüber hinaus sichergestellt werden, dass ein ausreichender Zwischenraum zwischen der Vertiefung und der Bodenleiste für das ablaufende Wasser zur Verfügung steht und die Bodenleiste trotzdem ausreichend verstärkt zum Herausschieben ausgebildet ist. Die Vertiefungen selbst können ebenfalls eine Entwässerungsbohrung oder zur seitlichen Öffnung hin ein Gefälle aufweisen, sodass das überschüssige Wasser in ein Wasserauffangsystem gelangt. Die Vertiefungen in der Kulturplatte können in der erfindungsgemäßen Ausführung in äquidistanten oder unterschiedlichen Abständen angeordnet sein, sodass verschiedene Jungpflanzen mit ein und derselben Kulturplatte bewurzelt werden können.

Darüber hinaus besteht in einer besonderen Ausgestaltung der Erfindung die Möglichkeit, dass eine oder mehrere Vertiefungen durch einen auflegbaren Dachstreifen abgedeckt werden. Die Dachstreifen sind hierbei leicht gewölbt, rund, spitzwinkelig oder treppenförmig ausgebildet, wobei es durchaus möglich ist, dass die verschiedenen Ausführungsformen miteinander kombiniert werden. Hierdurch wird sichergestellt, dass das zur Berieselung vorgesehene Wasser nur den Vertiefungen zugeführt wird, die tatsächlich mit Jungpflanzen bestückt sind. Hiermit wird insbesondere sichergestellt, dass eine optimierte Wassermenge für die Bewurzelung eingesetzt werden kann und somit Wasser eingespart wird. Dies ist besonders für Gebiete mit wenig Wasser von Bedeutung. Darüber hinaus wird durch eine verringerte Wassermenge das Gewächshausklima positiv beeinflusst und eventuelle Pflanzenkrankheiten vermieden.

In weiterer Ausgestaltung der Erfindung ist vorgesehen, dass die erfindungsgemäßen Kulturplatten miteinander verhakbar ausgebildet sein können, wobei eine links- und rechtsseitige Endplatte oder eine Mittelplatte und beidseitige Endplatten einsetzbar sind. Hierbei ist die Anfangsplatte an ihrem zur Kulturplattenreihe orientierten Ende hin besäumt, die Endplatte ebenfalls an ihrem zur Kulturplattenreihe gerichteten Ende und die Mittelplatte an beiden Seiten derart besäumt, dass die Anfangsplatte und die Endplatte untereinander einseitig einhakbar oder in die benachbarte Mittelplatte einhakbar sind. Eine Mittelplatte kann somit beidseitig eine benachbarte Anfangsplatte- oder Endplatte oder mit einer benachbarten Mittelplatte verbunden sein.

Die Erfindung wird anhand der Figuren näher erläutert.

Es zeigt:
- Fig. 1: in einer perspektivischen Ansicht eine Kulturplatte ohne eingelegte Pflanzsteifen,
- Fig. 2: in einer perspektivischen Ansicht eine erste Ausführung eines Pflanzstreifens mit einwandigen Zwischenstegen,
- Fig. 3: eine perspektivische Ansicht einer weiteren Ausführungsform eines Pflanzstreifens mit doppelwandigen Zwischenstegen,
- Fig. 4: eine erfindungsgemäße Kulturplatte gemäß Figur 1 mit eingelegten Pflanzenstreifen gemäß Figur 2 und 3,
- Fig. 5: in einer geschnittenen Seitenansicht gemäß der Verbindungslinie A-A, ein Schnitt durch die Kulturplatte mit Pflanzstreifen gemäß Figur 4,
- Fig. 6: in jeweils einer perspektivischen Ansicht mehrere Dachstreifen zur Überdeckung einer Vertiefung in der Kulturplatte und
- Fig. 7: in jeweils einer perspektivischen Ansicht weitere Dachstreifen gemäß Figur 6.

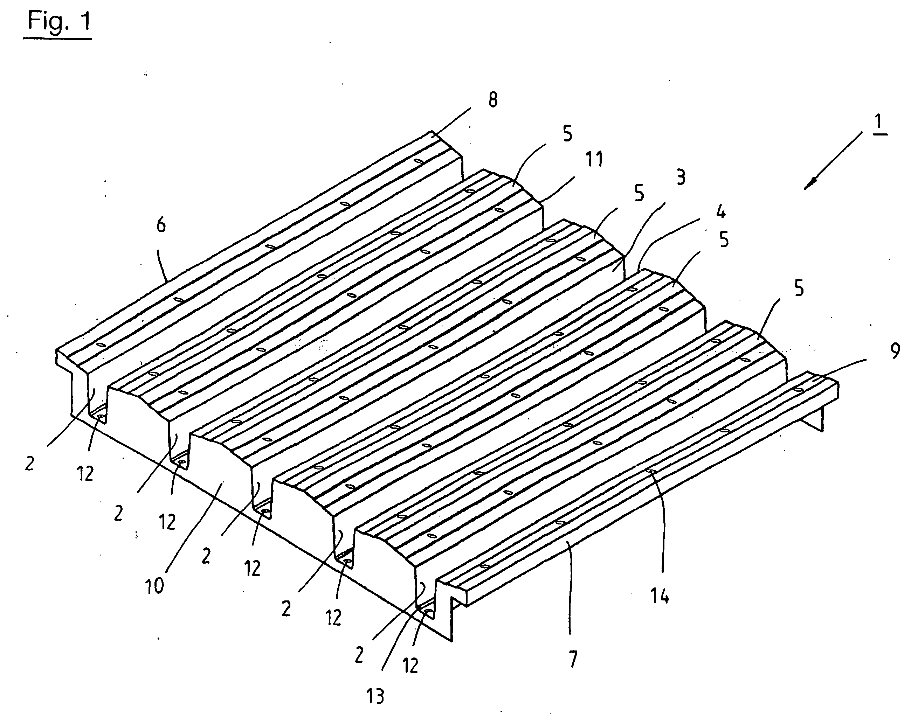

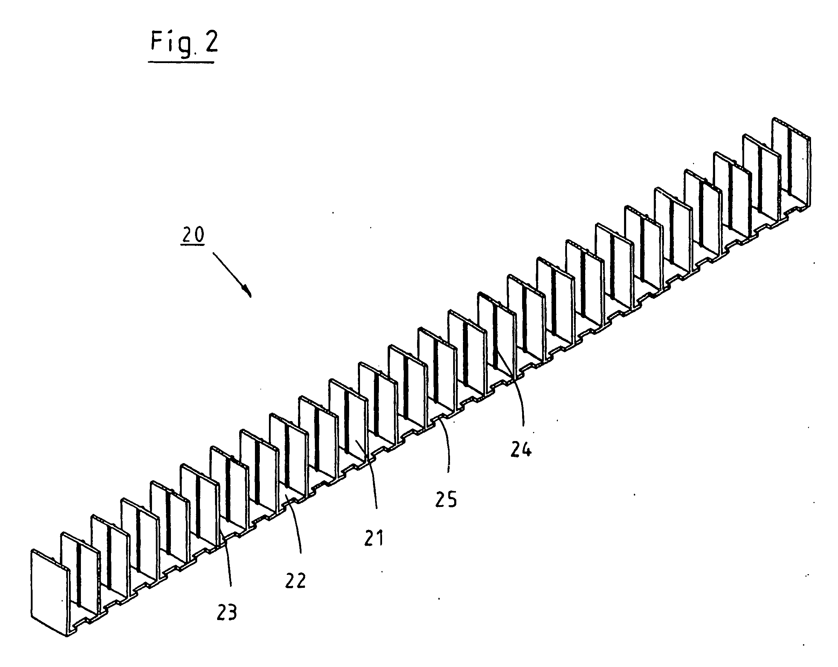

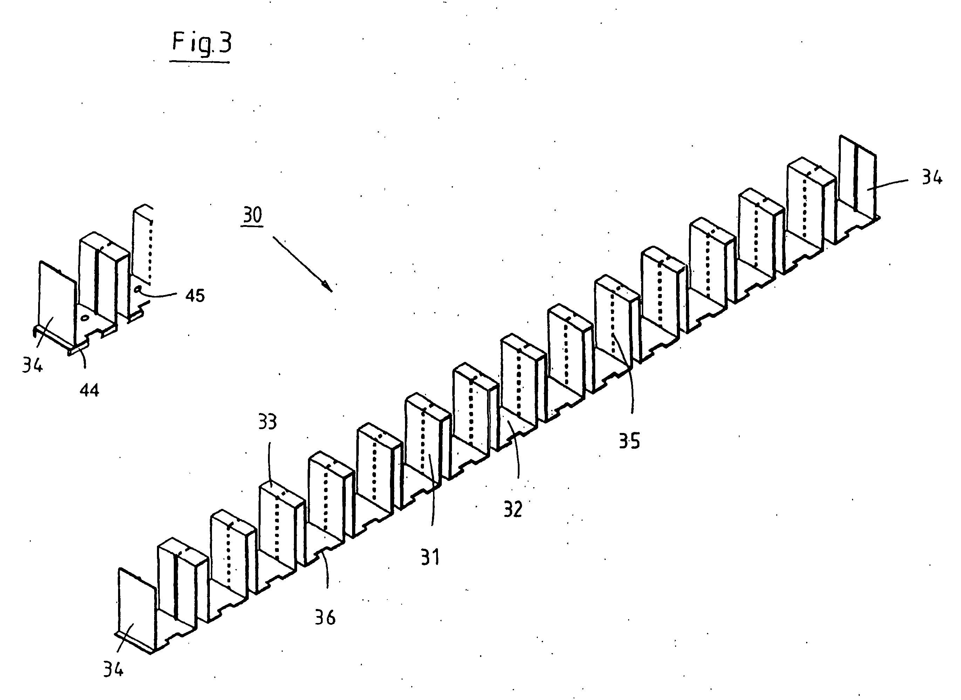

Figur 1 zeigt in einer perspektivischen Ansicht eine erfindungsgemäße Kulturplatte 1, in welche Pflanzstreifen gemäß Figur 2 oder 3 eingesetzt werden können. Die Kulturplatte 1 besteht im Wesentlichen aus einem tiefgezogenen Kunststoffteil, welches in Querrichtung liegende Vertiefungen 2 in äquidistanten Abständen aufweist. Hierbei besteht selbstverständlich die Möglichkeit unterschiedliche Kulturplatten 1 herzustellen, die hinsichtlich der Abstände der Vertiefungen variieren. Die Vertiefungen 2 werden hierbei durch zwei Seitenwände 3, 4 gebildet und sind zum Rand der Kulturplatte 1 hin offen gestaltet. Zwischen jeweils zwei Vertiefungen ist eine dachförmige Erhebung 5 ausgebildet, die im gezeigten Ausführungsbeispiel eine treppenförmige Struktur aufweist. Selbstverständlich können andere Strukturformen verwendet werden, wenn nur sichergestellt ist, dass das zur Berieselung vorgesehene Wasser seitlich in Richtung auf die Vertiefungen 2 abfließen kann. An den Endseiten 6, 7 der Kulturplatte 1 ist jeweils eine halbseitige Erhebung 8, 9 ausgebildet, die nach dem zwei Kulturplatten 1 zusammengefügt sind, der Form der Erhebung 5 entsprechen. Zur Aussteifung der Kulturplatte 1 ist diese lediglich mit einer stirnseitigen Abschlusswand 10, 11 versehen, und zwar sodass die Vertiefungen 2 an der Stirnseite offen sind.

Figur 2 zeigt in einer perspektivischen Ansicht einen ersten Pflanzstreifen 20, welcher aus einer Vielzahl von parallel verlaufenden Zwischenstegen 21 besteht, die einstückig über eine Bodenleiste 22 miteinander verbunden sind. Das gezeigte Ausführungsbeispiel des Pflanzstreifens 20 zeigt nahezu rechteckförmige Zwischenstege 21 auf, jedoch können diese auch konisch ausgebildet sein und ebenso die Seitenwände 3, 4 der Kulturplatte 1, sodass der Pflanzstreifen 20 in einer erhöhten Position gegenüber der Vertiefung 2 der Kulturplatte 1 zu liegen kommt, und zwar so, dass die Seitenkanten 23 an der Seitenwand 3, 4 anliegen. Zur Fixierung der Pflanzballen einer jeden Jungpflanze weisen die Zwischenstege 21 eine mittig angeordnete Verdickung 24 zu beiden Seiten auf, die ein Herausrutschen des Pflanzballens verhindern. Damit überschlüssiges Berieselungswasser ablaufen kann, ist die Bodenplatte seitlich mit rechteckförmigen Ausnehmungen 25 versehen, wobei die Ausnehmungen 25 jeweils annähernd mittig zwischen zwei Zwischenstegen 21 angeordnet sind. Zum Ablauf des Wassers können alternativ auch Bohrungen in der Bodenleiste 22 vorgesehen werden oder aber andere beispielsweise halbkreisförmige Einschnitte verwendet werden, es muss nur in ausreichender Form sichergestellt sein, dass das Wasser nach dem Einsetzen des Pflanzstreifens in die Kulturplatte 1 in die Vertiefung 2 ablaufen kann. Die Vertiefung 2 weist ebenfalls eine oder mehrere Bohrungen 12 oder ein seitliches Gefälle auf, sodass das Wasser von den Vertiefungen über die Bohrungen 12 in ein Wasserauffangsystem gelangt. Damit die Pflanzstreifen 20 nicht unmittelbar auf dem Boden der Vertiefung 2 aufliegen, können die Vertiefungen alternative mit seitlichen Führungsschienen 13 versehen sein oder aber die Bodenleiste weist auf der den Zwischenstegen 21 abgewandten Seite einen seitlichen Rand, Verdickungen, angeformte Stege oder Füße auf. Zum Überdecken einer Vertiefung 2 sind auf der Erhebung 5, 8, 9 Anschlagnoppen 14 ausgebildet, an denen Dachelemente zu liegen kommen.

Figur 3 zeigt in einer perspektivischen Ansicht eine weitere Ausführungsform eines Pflanzstreifens 30, der ebenfalls einstückig ausgebildet ist. Gegenüber dem aus Figur 2 bekannten Pflanzstreifen 20 sind die Zwischenstege 31 jedoch doppelwandig ausgebildet, wobei die Bodenleiste 32 unterbrochen ausgeführt ist und die einzelnen Zwischenstege 31 durch ein oben liegenden Quersteg 33 miteinander verbunden sind. Zu beiden Endseiten des Pflanzstreifens 30 sind einwandige Zwischenstege 34 ausgebildet. Die Zwischenstege 31, 34 weisen ebenfalls wieder eine Verdickung 35 auf, welche zur Fixierung der Pflanzballen verwendet wird. Die unterbrochene Bodenleiste 32 ist mit rechteckförmigen Ausnehmungen 36 ausgestattet, die annähernd mittig zu einem Pflanzraum angeordnet sind. Zur Stabilitätserhöhung können die einzelnen Bodenabschnitte der Bodenleiste 32 entweder verstärkt ausgeführt oder im Fußpunkt der Zwischenstege 31 durch Verstrebungen unter der Bodenleiste 32 zusätzlich verbunden sein. Aus der Teilfigur ist die Entwässerungsbohrung 45 sowie ein seitlicher Rand 44 ersichtlich.

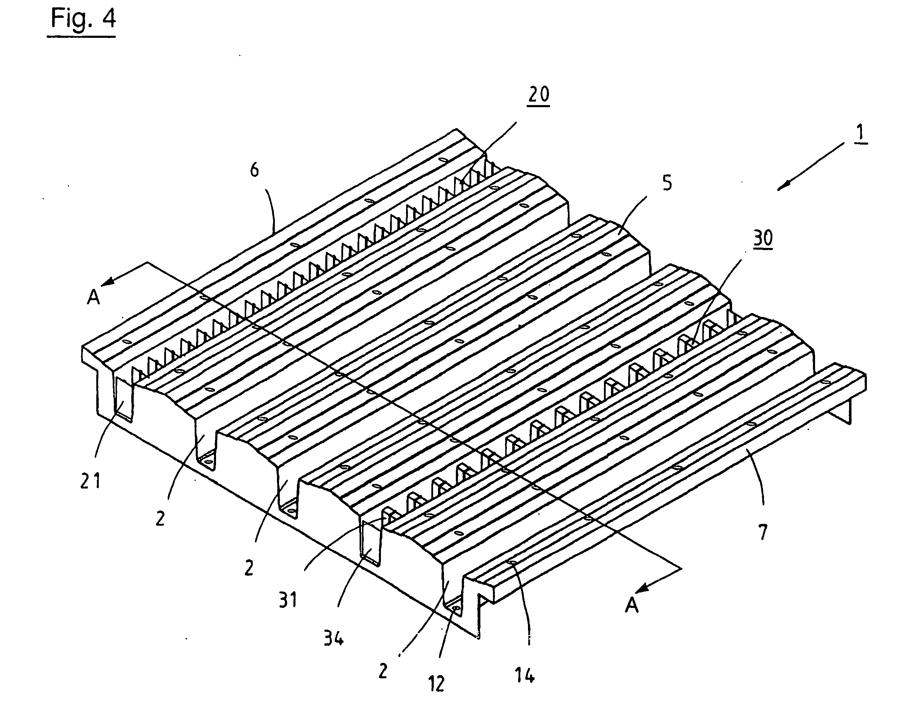

Figur 4 zeigt in einer perspektivischen Ansicht eine Kulturplatte 1 gemäß Figur 1, wobei in zwei der vorhandenen Vertiefungen 2 Pflanzstreifen 20 bzw. 30 eingesetzt sind. Die Kulturplatte 1 ist identisch mit der aus Figur 1 bekannten Kulturplatte 1 und die Pflanzstreifen 20 bzw. 30 sind ebenfalls identisch mit den aus Figur 2 bzw. 3 bekannten Pflanzstreifen. Der Pflanzstreifen 20 mit den parallel verlaufenden Zwischenstegen 21 ist der linksseitigen äußeren Vertiefung 2 eingesetzt, während hingegen der Pflanzstreifen 30 mit doppelwandig ausgebildeten Zwischenstegen 31 in einer mittleren Vertiefung 2 eingesetzt ist.

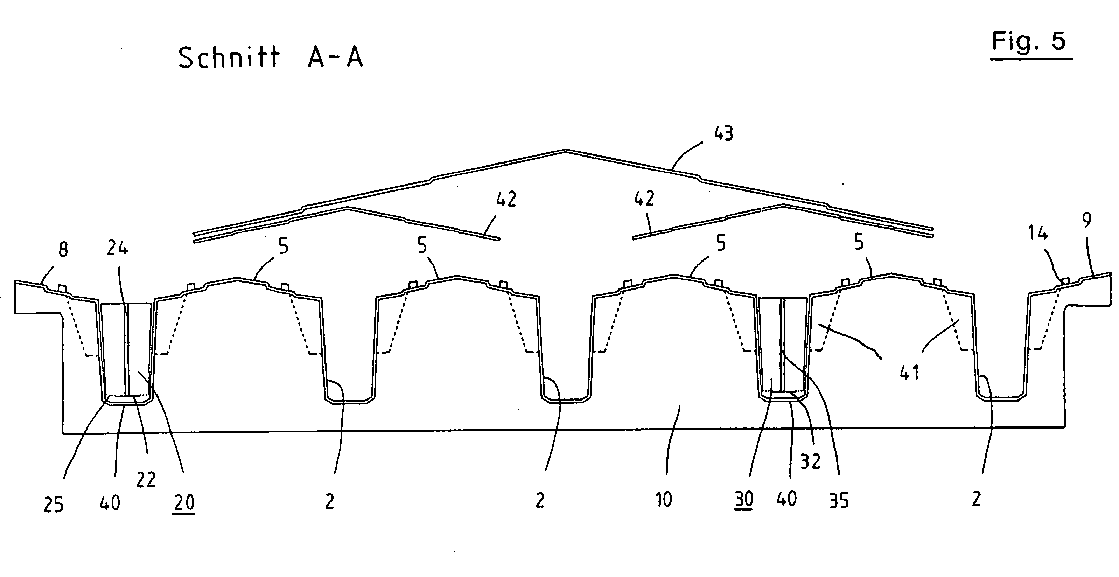

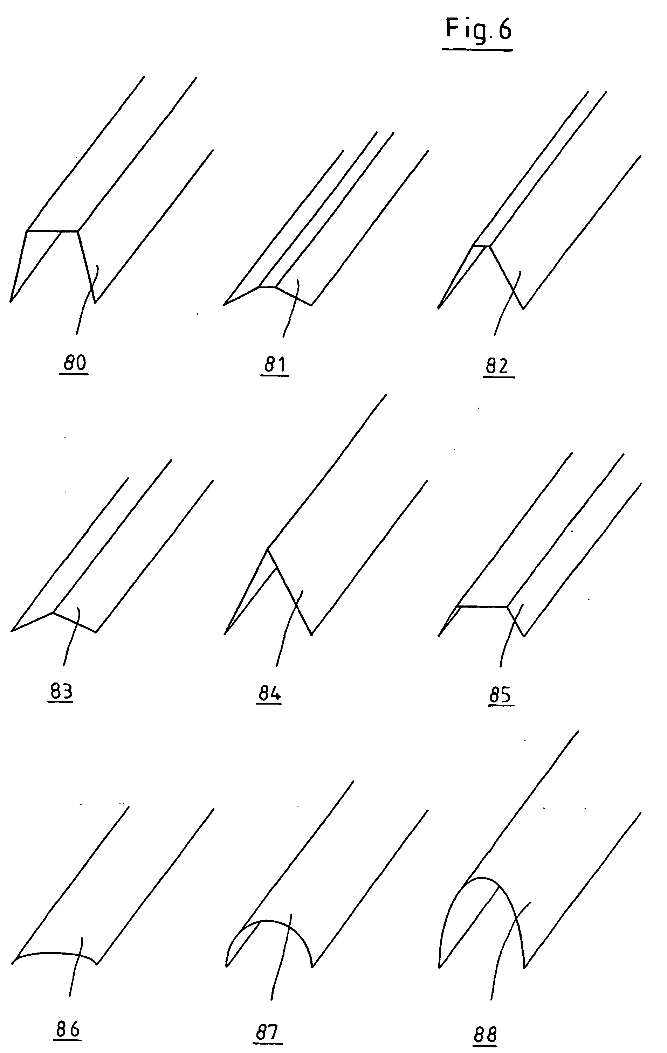

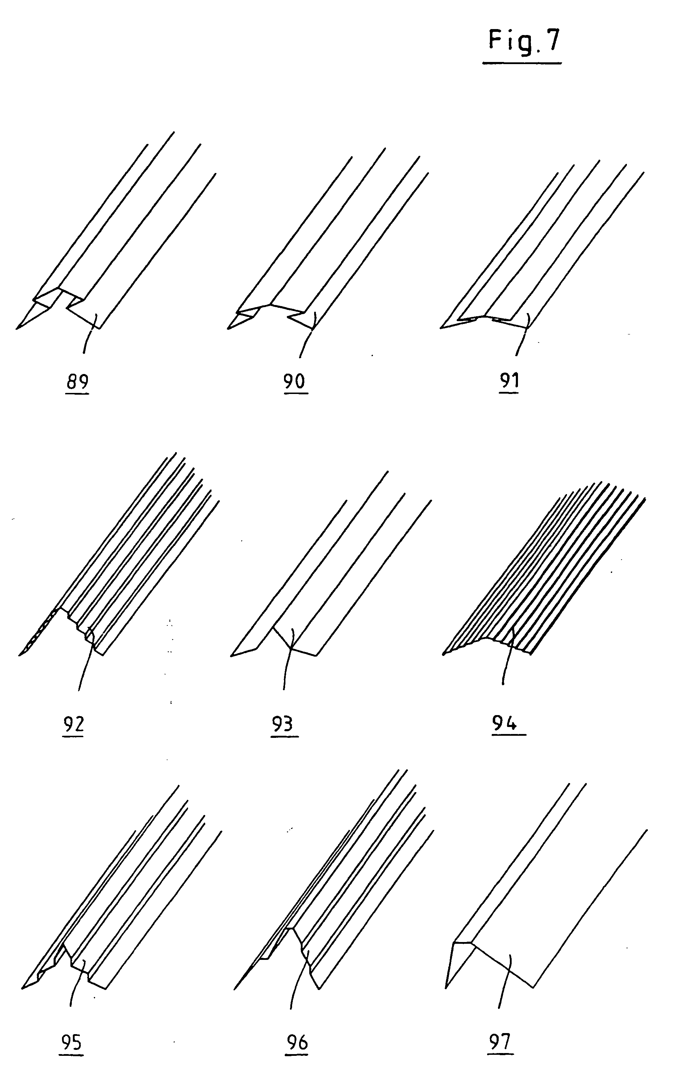

Aus der geschnittenen Ansicht der Kulturplatte 1 gemäß Figur 5 sind die in Abständen angeordneten Vertiefungen 2 deutlich zu erkennen, wobei in der linken Vertiefung 2 ein Pflanzstreifen 20 und in einer mittleren Vertiefung 2 ein Pflanzstreifen 30 eingesetzt ist. Von den beiden Pflanzstreifen 20, 30 ist jeweils ein Zwischensteg 21 bzw. 31 sowie die Bodenleiste 22 und 32 erkennbar. Die Zwischenstege 21, 22 weisen konisch auseinander laufende Seitenkanten 23 auf, sodass der Pflanzstreifen 20, 30 in einer erhöhten Position in der Vertiefung 2 zu liegen kommt. Alternativ besteht die Möglichkeit, an die Bodenleiste 22 bzw. 32 Verdichtungen, Stege oder Füße anzuformen, die eine vollständige Auflage auf den Bodenbereich 40 der Vertiefung 2 verhindern. Zur Ableitung des überschüssigen Berieselungswassers weisen die aus den Figuren 2 und 3 bekannten Pflanzstreifen 20, 30 seitliche Ausnehmungen 25, 36 auf, die in den gezeigten Schnittdarstellungen gestrichelt dargestellt sind. Zur Verstärkung der Kulturplatte 1 sind seitlich an den ausgeformten Vertiefungen 2 verdeckt liegende Verstärkungsstreifen 41 einstückig angeformt, die die Seitenwände 3, 4 zur weiteren Verstärkung mit den Erhebungen 5 verbinden. Die Erhebungen 5 sind hierbei, wie in Figur 1 bereits gezeigt, treppenförmig mit Abstufungen ausgestattet, sodass das zur Berieselung vorgesehene Wasser in die Vertiefung 2 ablaufen kann. Auf den Erhebungen 5 sind Anschlagnoppen 14 einstückig angeformt, die zur Anlage optionaler Dachstreifen vorgesehen sind. Die Dachstreifen 42 bzw. 43 sind zur Überdeckung einer oder drei Vertiefungen 2 vorgesehen und werden bevorzugt für Pflanzenzüchtungen verwendet, die aufgrund eines größeren Blattwerks größere Pflanzabstände erfordern. Die auflegbaren Dachstreifen 42, 43 sind im gezeigten Ausführungsbeispiel ebenfalls treppenförmig abgestuft, jedoch besteht ohne weiteres die Möglichkeit einen der weiteren Dachstreifen 80 - 97 zu verwenden. Durch die Dachstreifen 42 und 43 bzw. die weiteren Dachstreifen 80 - 97 der Figuren 6 und 7 wird sichergestellt, dass das zur Berieselung vorgesehene Wasser nur zu den Vertiefungen 2 gelangt, in denen tatsächlich Pflanzstreifen 20, 30 mit Pflanzen eingesetzt sind, während hingegen die weiteren Vertiefungen 2 abschirmend überdeckt werden. Durch diese besondere Maßnahme ist sichergestellt, dass nur die notwendige Wassermenge zur Berieselung verwendet werden muss, um eine ausreichende Bewässerung zu gewährleisten, wobei eine gleichmäßige Benetzung der Pflanztöpfe gewährleistet ist und vergleichsweise wenig Wasser benötigt wird. Durch die Verwendung der Dachstreifen 42, 43 besteht im Weiteren die Möglichkeit, dass größere Jungpflanzen oder solche mit großen Blättern ebenfalls in den vorgesehenen Kulturplatten 1 bewurzelt werden können, ohne das einzelne Töpfe keine ausreichende Wassermenge erhalten und austrocknen.

Figur 6 und 7 zeigen in jeweils einer perspektivischen Ansicht mehrere Dachstreifen 80 bis 97, die zum Überdecken vorhandener Vertiefungen 2 der Kulturplatten 1 verwendet werden können. Die Dachstreifen 80 bis 97 können hierbei hinsichtlich ihrer Abmessungen so gestaltet sein, dass sie eine einzelne Vertiefung 2 oder aber zwei oder drei Vertiefungen 2 gleichzeitig abdecken. Hierbei muss sichergestellt sein, dass ein Gefälle zu den parallel verlaufenden seitlichen Vertiefungen 2 ausgebildet ist, sodass das zur Berieselung vorgesehene Wasser ablaufen kann und unmittelbar in den Pflanzraum der Jungpflanzen gelangt. Die Dachstreifen 80 bis 97 weisen unterschiedliche Formen auf, beispielsweise kann es sich um runde, gewölbte oder dreieckige Dachstreifen handeln, die mit oder ohne Abflachung ausgestattet sind. Ebenfalls sind treppenförmige, trapezförmige oder Kombination der verschiedenen Ausführungsformen einsetzbar.

### Bezugszeichenliste

- 1: Kulturplatte
- 2: Vertiefung
- 3: Seitenwand
- 4: Seitenwand
- 5: Erhebung
- 6: Endseite
- 7: Endseite
- 8: Erhebung
- 9: Erhebung
- 10: Abschlusswand
- 11: Abschlusswand
- 12: Bohrung
- 13: Führungsschiene
- 14: Anschlagnoppen
- 20: Pflanzsteifen
- 21: Zwischensteg
- 22: Bodenleiste
- 23: Seitenkante
- 24: Verdickung
- 25: Ausnehmung
- 30: Pflanzsteifen
- 31: Zwischensteg
- 32: Bodenleiste
- 33: Quersteg
- 34: Zwischensteg
- 35: Verdickung
- 36: Ausnehmung
- 40: Bodenbereich
- 41: Verstärkungsstreifen
- 42: Dachstreifen
- 43: Dachstreifen
- 44: Rand
- 45: Entwässerungsbohrung
- 80 - 97: Dachstreifen

## Patentansprüche

1. Kulturplatte (1), insbesondere zum Bewurzeln von Jungpflanzen, mit parallel zueinander und beabstandet angeordneten Trennwänden zur Aufnahme der Jungpflanzen, wobei der Pflanzraum für jede Jungpflanze durch die Trennwände und quer zur Längsausrichtung der Trennwände liegende Zwischenstege (21, 31) begrenzt ist, welche über eine Bodenleiste (22,32) miteinander verbunden sind,
**dadurch gekennzeichnet,**
**dass** die Trennwände durch die Seitenwände (3, 4) einer Vertiefung (2) der Kulturplatte (1) gebildet sind und die Bodenleiste (22, 32) mit den Zwischenstegen (21, 31) seitlich aus den Vertiefungen (2) herausschiebbar ausgebildet ist.

2. Kulturplatte nach Anspruch 1,
**dadurch gekennzeichnet,**
**dass** die Seitenwände (3, 4) der Vertiefung (2) konisch zulaufend ausgebildet sind und die Zwischenstege (21, 31) konisch zulaufende Seitenkanten (23) aufweisen.

3. Kulturplatte nach Anspruch 1 oder 2,
**dadurch gekennzeichnet,**
**dass** die Zwischenstege (21, 31) zum Halt des Pflanzballens eine mittige Verdickung (24) oder eine Führungskante an den Seitenkanten (23) aufweisen.

4. Kulturplatte nach Anspruch 1, 2 oder 3,
**dadurch gekennzeichnet,**
**dass** die Zwischenstege (21, 31) ein- oder mehrwandig, insbesondere doppelwandig, ausgebildet sind.

5. Kulturplatte nach einem oder mehreren der Ansprüche 1 bis 4,
**dadurch gekennzeichnet,**
**dass** die Zwischenstege (21, 31) über eine Bodenleiste (22, 32) einstückig miteinander verbunden sind.

6. Kulturplatte nach einem oder mehreren der Ansprüche 1 bis 5,
**dadurch gekennzeichnet,**
**dass** die Bodenleiste (22, 32) zusammen mit den Zwischenstegen (21, 31) einen Pflanzstreifen (20, 30) bildet, dessen seitliche Begrenzung durch die Seitenwände (3, 4) der Vertiefung (2) vorgegeben ist, wobei die Bodenleiste (22, 32) gegenüber dem Bodenbereich (40) der Vertiefung (2) erhöht angeordnet ist.

7. Kulturplatte nach einem oder mehreren der Ansprüche 1 bis 6,
**dadurch gekennzeichnet,**
**dass** die Bodenleiste (22, 32) den Bodenbereich (40) der Vertiefung (2) gar nicht oder nur punktuell berührt.

8. Kulturplatte nach einem oder mehreren der Ansprüche 1 bis 7,
**dadurch gekennzeichnet,**
**dass** die Bodenleiste (22, 32) auf der den Zwischenstegen (21, 31) abgewandten Seite einen seitlichen Rand, Verdickungen, angeformte Stege oder Füße aufweist.

9. Kulturplatte nach einem oder mehreren der Ansprüche 1 bis 8,
**dadurch gekennzeichnet,**
**dass** die Bodenleiste (22, 32) zwischen jeweils zwei Zwischenstegen (21, 31) eine Entwässerungsbohrung oder eine seitliche eckige oder halbrunde Ausnehmung (25, 36) aufweist.

10. Kulturplatte nach einem oder mehreren der Ansprüche 1 bis 9,
**dadurch gekennzeichnet,**
**dass** die Bodenleiste (22, 32) hohlwandig, gerippt oder zumindest abschnittsweise verstärkt ausgebildet ist.

11. Kulturplatte nach einem oder mehreren der Ansprüche 1 bis 10,
**dadurch gekennzeichnet,**
**dass** die Vertiefungen (2) in äquidistanten oder unterschiedlichen Abständen angeordnet sind.

12. Kulturplatte nach einem oder mehreren der Ansprüche 1 bis 11,
**dadurch gekennzeichnet,**
**dass** die Vertiefungen (2) eine Entwässerungsbohrung (12) oder zur seitlichen Öffnung ein Gefälle aufweisen, sodass das überschüssige Wasser in ein Wasserauffangsystem gelangt.

13. Kulturplatte nach einem oder mehreren der Ansprüche 1 bis 12,
**dadurch gekennzeichnet,**
**dass** die zwischen zwei benachbarten Vertiefungen (2) hochgezogenen Bereiche des Plattenbodens der Kulturplatte dachförmig als Erhebung (5) ausgebildet sind.

14. Kulturplatte nach einem oder mehreren der Ansprüche 1 bis 13,
**dadurch gekennzeichnet,**
**dass** eine oder mehrere Vertiefungen (2) durch einen auflegbaren Dachstreifen (42, 43, 80 - 97) abgedeckt sind.

15. Kulturplatte nach einem oder mehreren der Ansprüche 1 bis 14,
**dadurch gekennzeichnet,**
**dass** die Dachstreifen (42, 43, 80 - 97) leicht gewölbt, rund, spitzwinkelig oder treppenförmig ausgebildet sind.

16. Kulturplatte nach einem oder mehreren der Ansprüche 1 bis 15,
**dadurch gekennzeichnet,**
**dass** mehrere Kulturplatten (1) miteinander verhakbar ausgebildet sind, wobei eine links- und rechtsseitige Endplatte oder mindestens eine Mittelplatte und beidseitige Endplatten einsetzbar sind.

17. Kulturplatte nach einem oder mehreren der Ansprüche 1 bis 16,
**dadurch gekennzeichnet,**
**dass** die Anfangsplatte an ihrem zur Kulturplattenreihe orientierten Ende besäumt, die Endplatte ebenfalls an ihrem zur Kulturplattenreihe gerichteten Ende besäumt und die Mittelplatte an beiden Seiten in derart besäumt ist, dass die Anfangsplatte und die Endplatte untereinander einseitig einhakbar oder in die benachbarte Mittelplatte einhakbar sind, wobei eine Mittelplatte beidseitig eine benachbarte Anfangs- oder Endplatte oder mit einer benachbarten Mittelplatte einhakbar ist.

## Claims

1. Cultivation tray (1), in particular for rooting seedlings, with partitions arranged parallel to one another and spaced apart for receiving the seedlings, wherein the planting space for each seedling is limited by the partitions and intermediate webs (21, 31) located transverse to the longitudinal orientation of the partitions, the intermediate webs being connected to one another via a base strip (22, 32), **characterised in that** the partitions are formed by the side walls (3, 4) of a recess (2) of the cultivation tray (1) and the base strip (22, 32) with the intermediate webs (21, 31) is designed to be laterally displaceable from the recesses (2).

2. Cultivation tray according to claim 1, **characterised in that** the side walls (3, 4) of the recess (2) are designed to taper conically and the intermediate webs (21, 31) have conically tapering side edges (23).

3. Cultivation tray according to claim 1 or 2, **characterised in that** the intermediate webs (21, 31) have a central thickening (24) or a guide edge at the side edges (23) to hold the plant ball.

4. Cultivation tray according to claim 1, 2 or 3, **characterised in that** the intermediate webs (21, 31), are designed to be single-walled or multi-walled, in particular double-walled.

5. Cultivation tray according to any one or more of claims 1 to 4, **characterised in that** the intermediate webs (21, 31) are connected to one another in one piece via a base strip (22,32).

6. Cultivation tray according to any one or more of claims 1 to 5, **characterised in that** the base strip (22, 32) together with the intermediate webs (21, 31) forms a plant strip (20, 30), the lateral delimitation of which is provided by the side walls (3, 4) of the recess (2), the base strip (22, 32) being arranged elevated relative to the base region (40) of the recess (2).

7. Cultivation tray according to any one or more of claims 1 to 6, **characterised in that** the base strip (22, 32) does not touch the base region (40) of the recess (2) at all, or only at points.

8. Cultivation tray according to any one or more of claims 1 to 7, **characterised in that** the base strip (22, 32) has a side edge, thickenings, moulded-on webs or feet, on the side remote from the intermediate webs (21, 31).

9. Cultivation tray according to any one or more of claims 1 to 8, **characterised in that** the base strip (22, 32) has a water drainage hole or a side angular or semi-circular recess (25, 36) between two respective intermediate webs (21, 31).

10. Cultivation tray according to any one or more of claims 1 to 9, **characterised in that** the base strip (22, 32) is hollow-walled, ribbed or, at least section-wise,
reinforced in design

11. Cultivation tray according to any one or more of claims 1 to 10, **characterised in that** the recesses (2) are arranged at equidistant or different spacings.

12. Cultivation tray according to any one or more of claims 1 to 11, **characterised in that** the recesses (2) have a water drainage hole (12) or a slope to the lateral opening, so excess water arrives in a water collection system.

13. Cultivation tray according to any one or more of claims 1 to 12, **characterised in that** the raised regions of the tray base of the cultivation tray between two adjacent recesses (2) are designed in a roof shape as an elevation (5).

14. Cultivation tray according to any one or more of claims 1 to 13, **characterised in that** one or more recesses (2) are covered by a roof strip (42, 43, 80 to 97) which can be placed on.

15. Cultivation tray according to any one or more of claims 1 to 14, **characterised in that** the roof strips (42, 43, 80 to 97) are siightly curved, round, acute angled or step-shaped in design.

16. Cultivation tray according to any one or more of claims 1 to 15, **characterised in that** a plurality of cultivation trays (1) are designed so as to be capable of being hooked to one another, wherein it is possible to use a left-hand and right-hand end tray or at least a centre tray and either-side end trays.

17. Cultivation tray according to any one or more of claims 1 to 16, **characterised in that** the starting tray is trimmed at its end oriented toward the row of cultivation trays, the end tray is also trimmed at its end directed toward the row of cultivation trays and the centre tray is trimmed on the two sides in such a way that the starting tray and the end tray can be hooked together on one side or can be hooked into the adjacent centre tray, wherein a centre tray can be hooked on either side to an adjacent starting tray or end tray or to an adjacent centre tray.

## Revendications

1. Plateau (1) de culture, notamment pour l'enracinement de plantules, comprenant des cloisons parallèles et à distance l'une de l'autre de réception des plantules, l'espace pour chaque plantule étant délimité par les cloisons et par des réglettes (21, 31) intermédiaires s'étendant transversalement à la direction longitudinale des cloisons et reliées entre elles par des baguettes (22, 32) de fond,
**caractérisé**
**en ce que** les cloisons sont formées par les parois (3, 4) latérales d'une cavité (2) du plateau (1) de culture et les baguettes (22, 32) de fond sont constituées de manière à pouvoir être sorties latéralement des cavités (2) avec les réglettes (21, 31) intermédiaires.

2. Plateau de culture suivant la revendication 1,
**caractérisé**
**en ce que** les parois (3, 4) latérales de la cavité (2) sont coniques et les réglettes (21, 31) intermédiaires ont des bords (23) latéraux coniques.

3. Plateau de culture suivant la revendication 1 ou 2,
**caractérisé**
**en ce que** les réglettes (21, 31) intermédiaires ont, pour le maintien de la motte du plantule, un épaississement (24) au milieu ou un bord de guidage sur les bords (23) latéraux.

4. Plateau de culture suivant la revendication 1, 2 ou 3,
**caractérisé**
**en ce que** les réglettes (21, 31) intermédiaires sont constituées en ayant une paroi ou plusieurs parois, notamment en ayant deux parois.

5. Plateau de culture suivant l'une ou plusieurs des revendications 1 à 4,
**caractérisé**
**en ce que** les réglettes (21, 31) intermédiaires sont reliées entre elles d'un seul tenant par une baguette (22, 32) de fond.

6. Plateau de culture suivant l'une ou plusieurs des revendications 1 à 5,
**caractérisé**
**en ce que** la baguette (22, 32) de fond forme ensemble avec les réglettes (21, 31) intermédiaires une bande (20, 30) pour plantules, dont la délimitation latérale est prescrite par les parois (3, 4) latérales de la cavité (2), la baguette (22, 32) de fond étant surélevée par rapport à la partie (40) de fond de la cavité (2).

7. Plateau de culture suivant l'une ou plusieurs des revendications 1 à 6,
**caractérisé**
**en ce que** la baguette (22, 32) de fond ne touche pas ou ne touche que ponctuellement la partie (40) de fond de la cavité (2).

8. Plateau de culture suivant l'une ou plusieurs des revendications 1 à 7,
**caractérisé**
**en ce que** la baguette (22, 32) de fond a, du côté éloigné des réglettes (21, 31) intermédiaires, un bord latéral, des épaississements, des rebords ou pieds qui en sont issus.

9. Plateau de culture suivant l'une ou plusieurs des revendications 1 à 8,
**caractérisé**
**en ce que** la baguette (22, 32) de fond a, entre, respectivement, deux réglettes (21, 31) intermédiaires, un trou de drainage ou un évidement (25, 36) latéral cunéiforme ou hémicirculaire.

10. Plateau de culture suivant l'une ou plusieurs des revendications 1 à 9,
**caractérisé**
**en ce que** la baguette (22, 32) de fond est à parois creuses, nervurées ou au moins renforcées par tronçon.

11. Plateau de culture suivant l'une ou plusieurs des revendications 1 à 10,
**caractérisé**
**en ce que** les cavités (2) sont équidistantes ou sont à des distances différentes.

12. Plateau de culture suivant l'une ou plusieurs des revendications 1 à 11,
**caractérisé**
**en ce que** les cavités (2) ont un trou (12) de drainage ou, pour une ouverture latérale, une pente, de sorte que l'eau en excès arrive à un système de collecte de l'eau.

13. Plateau de culture suivant l'une ou plusieurs des revendications 1 à 12,
**caractérisé**
**en ce que** les parties, surélevées entre deux cavités (2) voisines, du fond du plateau de culture sont constituées en tant que toit sous la forme d'une surélévation.

14. Plateau de culture suivant l'une ou plusieurs des revendications 1 à 13,
**caractérisé**
**en ce qu'**une ou plusieurs cavités (2) sont recouvertes d'une bande (42, 43, 80 à 97) de toit qui peut être posée.

15. Plateau de culture suivant l'une ou plusieurs des revendications 1 à 14,
**caractérisé**
**en ce que** les bandes (42, 43, 80 à 97) de toit sont légèrement voûtées, rondes, en angle aigu ou en forme d'escalier.

16. Plateau de culture suivant l'une ou plusieurs des revendications 1 à 15,
**caractérisé**
**en ce que** plusieurs plateaux (1) de culture sont constitués de manière à pouvoir s'accrocher entre eux, un plateau d'extrémité du côté gauche et du côté droit, ou au moins un plateau médian et deux plateaux d'extrémité des deux côtés pouvant être utilisés.

17. Plateau de culture suivant l'une ou plusieurs des revendications 1 à 16,
**caractérisé**
**en ce que** le plateau du début est rogné à son extrémité dirigée vers la rangée de plateaux de culture et le plateau médian est rogné des deux côtés de façon à ce que le plateau de début et le plateau d'extrémité puissent être accrochés entre eux d'un côté ou puissent être accrochés au plateau médian voisin, un plateau médian pouvant être des deux côtés accroché à un plateau voisin de début ou d'extrémité ou à un plateau médian voisin.
